# DEMANDE DE BREVET EUROPEEN

(11) **EP 1 742 318 A1**
(43) Date de publication de la demande: **10.01.2007**
(21) Numéro de dépôt: 06300753.8
(22) Date de dépôt: 04.07.2006
(51) Int. Cl.: H02G 15/18

(54) **Tube support de manchon retractable à froid pour jonction de câbles électriques**

(30) Priorité: 06.07.2005 FR 0552068
(71) Demandeur: Nexans, 75008 Paris (FR)
(72) Inventeur: André, Patrick, 08000, La Francheville (FR)
(74) Mandataire: Lenne, Laurence

(57) **Abrégé**

L'invention concerne un tube support (1) de manchon rétractable pour jonction de câbles électriques destiné à supporter un manchon à un état expansé puis à être enlevé afin de permettre la rétraction du manchon sur la jonction.

Selon l'invention, le tube support est constitué d'un tube ouvert équipé sur ses deux bords longitudinaux de moyens d'accrochage mutuel.

## Description

L'invention concerne un tube support de manchon rétractable à froid pour jonction de câbles électriques.

Lors d'une telle jonction, une fois le conducteur connecté, deux tubes supports cylindriques de section circulaire en matière plastique, par exemple en polypropylène, aboutés, revêtus d'un manchon élastomère rétractable à froid, sont disposés au-dessus de la connexion, puis les tubes supports sont retirés par tirée et par cassure de chaque côté de la jonction, et le manchon par rétraction vient recouvrir intimement la connexion et les extrémités de câbles.

Il est connu de réaliser un tel tube support au moyen de deux demi-tubes soudés ensemble par soudage par ultra sons sur deux zones à proximité des extrémités des demi-tubes. Le tube support ainsi obtenu présente quatre zones de soudure longitudinale selon deux génératrices diamétralement opposées.

Ce mode de réalisation pose les problèmes techniques suivants.

Les deux demi-tubes sont moulés par injection et à cause du retrait de moulage, les demi-tubes ne sont pas d'un cylindricité parfaite. Ils sont déformés et de ce fait leur emboîtement au niveau des soudures est imparfait.

Le tube a tendance à se déformer sous la pression exercée par le manchon. En effet, dans la zone centrale du tube, les demi-tubes ne sont pas reliés et il en résulte un déplacement relatif de ces demi-tubes et des effets de gauchissement, de bâillement et d'ovalisation du tube support obtenu.

Dans les zones d'extrémité, la soudure génère des bourrelets à l'intérieur du tube qui peuvent venir en contact et s'accrocher sur les pièces se trouvant à l'intérieur du tube lorsqu'il est installé au-dessus des câbles et de leur connexion.

Lors du montage sur la jonction, le tube support est enlevé par tirée et cassure. Cette cassure s'effectue le long des zones de soudure. Ces zones de soudure sont donc délicates à réaliser. En effet, il faut trouver un compromis entre la solidité nécessaire à un maintien correct des deux demi-tubes et entre une certaine fragilité nécessaire à une cassure relativement aisée lors de l'enlèvement du tube

L'opération de soudure par ultra-sons est coûteuse en main d'oeuvre et en maintenance et par ailleurs est très bruyante.

Il est par ailleurs connu du document de brevet FR 2810 465 de réaliser un tube support de manchon rétractable pour jonction de câbles électriques destiné à supporter un manchon à un état expansé puis à être enlevé afin de permettre la rétraction du manchon sur la jonction, constitué d'un tube ouvert.

Un tel tube support est maintenu dans sa position fermé uniquement grâce à la pression radiale exercée par le manchon rétractable, une fois que ce dernier est posé sur le tube.

Le processus de fabrication et de montage du manchon rétractable sur le tube support est complexe puisqu'il faut utiliser un outillage externe de type lien circulaire pour maintenir le tube support fermé lors de la mise en place du manchon sur ce dernier.

L'invention résout ce problème et pour ce faire, elle propose un tube support de manchon rétractable pour jonction de câbles électriques destiné à supporter un manchon à un état expansé puis à être enlevé afin de permettre la rétraction du manchon sur la jonction, constitué d'un tube ouvert et
caractérisé en ce que ce tube ouvert est équipé sur ses deux bords longitudinaux de moyens d'accrochage mutuel.

Les moyens d'accrochage permettent d'une part une fermeture aisée du tube support et d'autre part, une cassure du tube support de façon régulière en fin de montage de la jonction.

Selon un mode de réalisation préféré de l'invention, lesdits moyens d'accrochage sont régulièrement répartis sur lesdits bords longitudinaux.

De préférence, lesdits moyens d'accrochage sont constitués de dents de clipsage.

Avantageusement, lesdits bords longitudinaux sont constitués de languettes d'emboîtement d'épaisseur égale à sensiblement la moitié de l'épaisseur totale du tube.

De préférence, lesdites languettes d'emboîtement d'un bord sont alternativement internes et externes.

Avantageusement, lesdites dents de clipsage sont disposées sur les faces en contact de certaines desdites languettes.

L'invention est décrite ci-après plus en détail à l'aide de figures ne représentant qu'un mode de réalisation préféré de l'invention.

Les figures 1A à 1E sont des vues de face, en section et en perspective d'un tube support conforme à l'invention, en position ouverte.

Les figures 2A à 2E sont des vues de face, en section et en perspective d'un tube support conforme à l'invention, en position montée.

Les figures représentent donc un tube 1 support de manchon rétractable pour jonction de câbles électriques destiné à supporter un manchon à un état expansé puis à être enlevé afin de permettre la rétraction du manchon sur la jonction. Il est constitué d'un tube ouvert équipé sur ses deux bords longitudinaux de moyens d'accrochage mutuel.

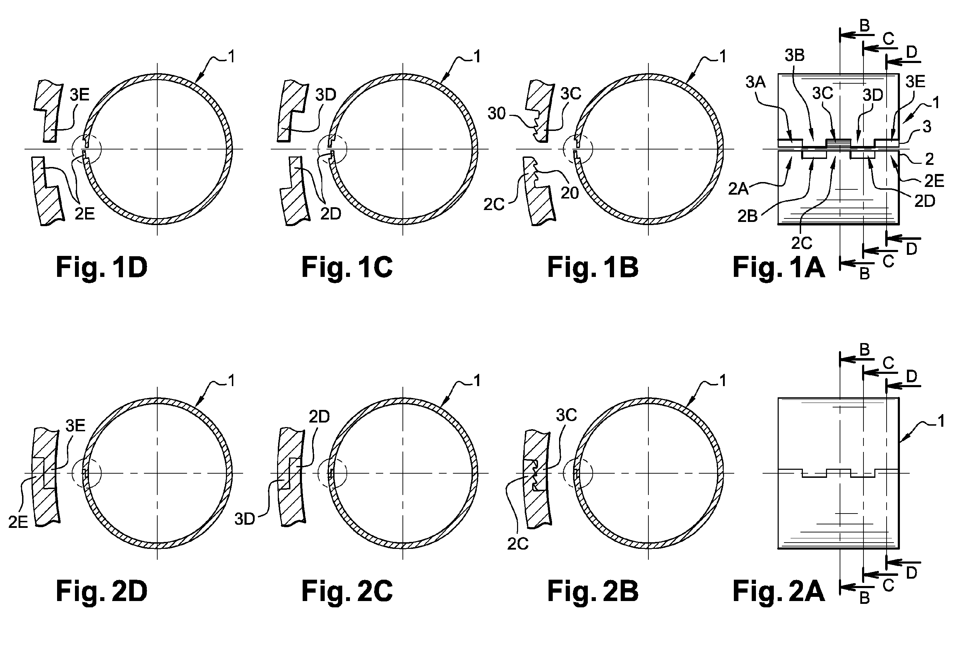

Les figures 1 A à 1 D représente le tube support ouvert, tel qu'il se présente en sortie de moulage par injection. Il est réalisé en matière plastique, par exemple en polypropylène.

Les moyens d'accrochage sont régulièrement répartis sur les bords longitudinaux, destiné à être alignés et reliés. Ces deux bords longitudinaux sont constitués de languettes d'emboîtement d'épaisseur égale à sensiblement la moitié de l'épaisseur totale du tube, les languettes d'emboîtement d'un bord étant alternativement internes et externes.

Plus précisément, si l'on considère un bord 2, il comporte une série de languettes, dont une languette sur deux est interne, telles les languettes référencées 2B et 2D, les autres languettes étant externes, telles les languettes référencées 2A, 2C et 2E.

L'autre bord 3 est constitué de la même façon avec inversion de la position des languettes, afin de permettre l'emboîtement des languettes des deux bords 2, 3, lorsque ces deux bords sont alignés et pressés l'un contre l'autre.

Selon le mode de réalisation illustré, les languettes sont toutes de longueur identique. Mais avantageusement, en réalisant des languettes d'accrochage de longueur différente, on peut régler la force de tenue du tube, ce qui est bénéfique lors de l'arrachement du tube du conducteur.

Un certain nombre de languettes sont pourvues des moyens d'accrochage constitués de dents de clipsage 20, 30 disposées sur les faces en contact de certaines des languettes 2C, 3C. Ces moyens d'accrochage sont disposés sur la longueur totale du tube 1.

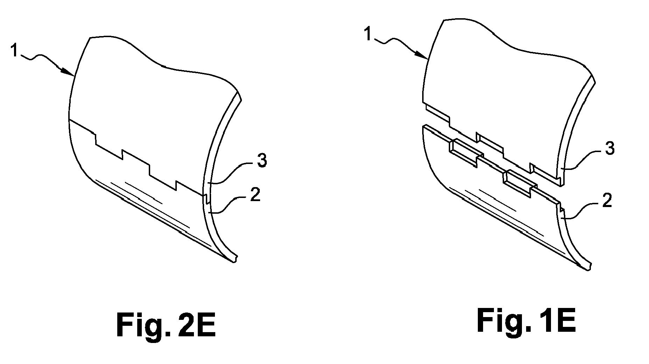

En sortie de moulage, le tube support 1 est fermé comme représenté sur les figures 2A à 2E.

Les languettes des deux bords 2, 3 en vis à vis viennent s'emboîter l'une sur l'autre et les languettes 2C, 3C portant les dents de clipsage viennent s'accrocher.

Le tube support 1 est alors prêt à être utilisé en tant que support de manchon rétractable pour jonction de câbles électriques, le manchon étant posé à un état expansé sur le tube support 1 qui est apporté au-dessus d'une jonction où il est enlevé par tirée et cassure, afin de permettre la rétraction du manchon sur la jonction.

Le tube conforme à l'invention peut être clipsé directement en sortie de moulage par un robot ou un autre moyen automatique, ce qui protège les dents de clipsage et les languettes d'emboitement lors des transports, et ce qui évite un poste supplémentaire de fermeture du tube.

## Revendications

1. Tube support (1) de manchon rétractable pour jonction de câbles électriques destiné à supporter un manchon à un état expansé puis à être enlevé afin de permettre la rétraction du manchon sur la jonction, constitué d'un tube ouvert et **caractérisé en ce que** ce tube ouvert est équipé sur ses deux bords longitudinaux de moyens d'accrochage mutuel.

2. Tube support selon la revendication 1, **caractérisé en ce que** lesdits moyens d'accrochage sont régulièrement répartis sur lesdits bords longitudinaux (2, 3).

3. Tube support selon l'une des revendications précédentes, **caractérisé en ce que** lesdits moyens d'accrochage sont constitués de dents de clipsage (20, 30).

4. Tube support selon l'une des revendications précédentes, **caractérisé en ce que** lesdits bords longitudinaux sont constitués de languettes d'emboîtement d'épaisseur égale à sensiblement la moitié de l'épaisseur totale du tube.

5. Tube support selon la revendication précédente, **caractérisé en ce que** lesdites languettes d'emboîtement d'un bord sont alternativement internes et externes.

6. Tube support selon la revendication 3 et l'une des revendications 4 et 5, **caractérisé en ce que** lesdites dents de clipsage (20, 30) sont disposées sur les faces en contact de certaines desdites languettes.
